# EUROPEAN PATENT APPLICATION

(11) **EP 2 426 579 A1**
(43) Date of publication of application: **07.03.2012**
(21) Application number: 10769770.8
(22) Date of filing: 21.04.2010
(51) Int. Cl.: G06F 3/041, G06F 3/044

(54) **TOUCH PANEL, TOUCH PANEL MANUFACTRUING METHOD, AND ELECTRONIC APPARATUS**

(30) Priority: 28.04.2009 JP 2009109922
(71) Applicant: NEC Corporation, Tokyo 108-8001 (JP)
(72) Inventor: YAMAGUCHI, Yoshiyuki, Tokyo 108-8001 (JP)
(74) Representative: Baronetzky, Klaus
(86) International application number: PCT/JP2010/057525
(87) International publication number: WO 2010/126072

(57) **Abstract**

An object of the present invention is to provide a touch panel, a touch panel manufacturing method and an electronic apparatus of a structure by which it is possible to effectively use a space outside a display area and it is possible to diversify a combination of a layout or a combination of a design of a touch sensor inside and outside the display area.

A touch panel of the present invention includes: a touch screen having one face to which touch operation is performed by a user; a sensor substrate which is arranged so that it faces the other face of the touch screen; and a plurality of touch sensors in which a capacitance changes along with touch operation. The touch screen includes a transparent window part which is arranged so that it overlaps with the display area, and a periphery part located outside the transparent window part and arranged so that it overlaps with an area outside the display area. The plurality of touch sensors includes a first touch sensor that is arranged so that it overlaps with the transparent window part, and a second touch sensor which is arranged so that it overlaps with the periphery part. The first touch sensor is provided on a face of a sensor substrate in the touch screen side integral with the sensor substrate, and a second touch sensor is formed in a substrate-like or sheet-like member besides the sensor substrate.

## Description

### Technical Field

The present invention relates to a touch panel, a touch panel manufacturing method and an electronic apparatus.

### Background Art

A touch panel which detects touch operation to a touch screen arranged such a way that it covers a display area of a display device as input operation is generally known.

A touch panel of a capacitance type has a touch sensor whose capacitance is changed by touch operation. Generally, in a display screen of a display device, an image called an input icon is indicated in a position corresponding to a touch sensor. The input icon functions as an indicator which indicates an operation position. When a user performs touch operation to a part corresponding to the input icon in the touch screen, the touch panel detects the touch operation. That is, the touch panel detects touch operation based on a capacitance change of the touch sensor in the position corresponding to an input icon. Thus, it is general that a detection operation of touch operation by the touch sensor within the display area is performed in conjunction with indication of the input icon.

According to such touch panel, it becomes easy for the user to recognize a required operation intuitively. Therefore, comfortable operation feeling is gotten generally.

In patent document 1, there is disclosed a touch panel in which a touch sensor (it is described as "switch" in patent document 1) is arranged also in the outside of a display area for the purpose of effective use of a space.

### Prior art document

### Patent document

Patent document 1: Japanese Patent Application Laid-Open No. 2003-067134

### Summary of Invention

### Problems to be Solved by the Invention

For example, when an image (an image of a content, for example) is indicated using most of a display area of an electronic apparatus having a touch panel, it will be difficult to reserve an enough display space for indication of an input icon corresponding to a touch sensor. Moreover, in this case, the input icon may disturb of indication of the image.

According to an indication setting (such as a size of a letter), a display position of the input icon (in particular, the input icon with a high frequency of use) may vary. Or, the display size of the input icon may become small, and, as a result, it may become difficult to perform touch operation. In these cases, even though the electronic apparatus with a touch panel has the touch panel usefully, it will be difficult to get comfortable operation feeling.

Thus, operability of the touch sensor in the display area tends to undergo influence (restrictions) of indication in the display area. The reason is that, as mentioned above, it is general to perform a detection operation of touch operation by the touch sensor in the display area in conjunction with indication of the input icon.

On the other hand, in the patent document 1, the electronic apparatus having the touch sensor also outside a display area is disclosed. However, the touch sensor outside the display area in the electronic apparatus described in the patent document 1 is formed by extending the touch sensor of the display area. Therefore, in the electronic apparatus described in the patent document 1, a combination of layouts or a combination of designs of touch sensors inside and outside the display area cannot be diversified. Therefore, there is a problem that product development of a various kinds of an electronic apparatus having a touch panel is difficult to perform.

In view of such problem, an object of the present invention is to provide a touch panel, a touch panel manufacturing method and an electronic apparatus of a structure capable of effectively using a space outside a display area and capable of diversifying a combination of layouts or a combination of designs of touch sensors inside and outside the display area.

### Means for solving the Problem

A touch panel of the present invention includes: a touch screen having one face to be touch-operated by a user; a sensor substrate arranged facing an other face of the touch screen; a plurality of touch sensors each having a capacitance changed by the touch operation; the touch screen including a transparent window part arranged in a manner overlapping with a display area and a periphery part located outside the transparent window part and arranged in a manner overlapping with an area outside the display area; the plurality of touch sensors including a first touch sensor arranged in a manner overlapping with the transparent window part, and a second touch sensor arranged in a manner overlapping with the periphery part; the first touch sensor being provided on a face of the sensor substrate in a side of the touch screen integrally with the sensor substrate; and the second touch sensor being formed in a substrate-like or sheet-like member besides the sensor substrate.

A touch panel manufacturing method of the present invention includes, in a manufacturing method of a touch panel having a touch screen: a first step of producing a sensor substrate side module via a step for providing a first touch sensor on one face of a sensor substrate in an integrated manner with the sensor substrate; a second step of producing a second touch sensor side module via a step for forming the second touch sensor in a substrate-like or sheet-like member besides the sensor substrate; and a third step for assembling the second touch sensor side module and the sensor substrate side module together in a manner the first touch sensor overlapping with a transparent window part of the touch screen and the second touch sensor overlapping with a periphery part of the touch screen.

An electronic apparatus of the present invention includes: a touch panel according to the present invention, and a display device; the transparent window part of the touch panel being arranged in a manner overlapping with a display area of the display device; and the periphery part of the touch panel being arranged in a manner overlapping with an area outside the display area.

### Advantage of invention

According to the present invention, it becomes possible to use a space effectively and it is possible to diversify a combination of layouts or a combination of designs of touch sensors inside and outside a display area.

### Brief Description of Drawings

FIG. 1 is a plan view illustrating a structure of a touch panel according to a first exemplary embodiment of the present invention, and in which FIG. 1A is a diagram seen from the front of a touch screen and FIG. 1B is a diagram seen from the back of a sensor substrate.
FIG. 2 indicates a structure of an electronic apparatus according to the first exemplary embodiment of the present invention.
FIG. 3 is a plan view illustrating a structure of a touch panel according to a second exemplary embodiment of the present invention, and in which FIG. 3A is a diagram seen from the front of a touch screen and FIG. 3B is a diagram seen from the back of a sensor substrate.
FIG. 4 is a diagram illustrating a structure of major portions of a touch panel according to the second exemplary embodiment of the present invention, and in which FIG. 4A is a sectional view and FIG.4B is a plan view seen from the back of a sensor substrate.
FIG. 5 is a diagram describing a structure of a first touch sensor, and in which FIG.5A is a plan view and FIG. 5B is a sectional view.
FIG. 6 is a block diagram illustrating a structure of an electronic apparatus according to the second exemplary embodiment of the present invention.
FIG. 7 is a sectional view describing a joint structure of a case and a touch screen in an electronic apparatus according to the second exemplary embodiment of the present invention.
FIG. 8 is a diagram describing detection operation by a first touch sensor.
FIG. 9 is a diagram illustrating an example of a screen display of a liquid crystal display device of an electronic apparatus according to the second exemplary embodiment of the present invention.
FIG. 10 is a diagram illustrating a structure of a touch panel according to a third exemplary embodiment of the present invention, and in which FIG. 10A is a plan view in which a touch screen is seen from the back and FIG. 10B is a sectional view.
FIG. 11 is a sectional view illustrating a structure of a touch panel according to a modified example of the third exemplary embodiment of the present invention.
FIG. 12 is a plan view illustrating a structure of a touch panel according to a fourth exemplary embodiment of the present invention, and in which FIG. 12A is a diagram seen from the back of a sensor substrate and FIG. 12B is a diagram in which a sensor substrate is seen from the front.

### Mode for Carrying Out the Invention

Exemplary embodiments of the present invention will be described with reference to drawings. However, such embodiments do not limit the technical scope of the present invention.. Further, in all drawings, a same symbol is assigned to similar components, and description will be omitted appropriately.

### [The first exemplary embodiment]

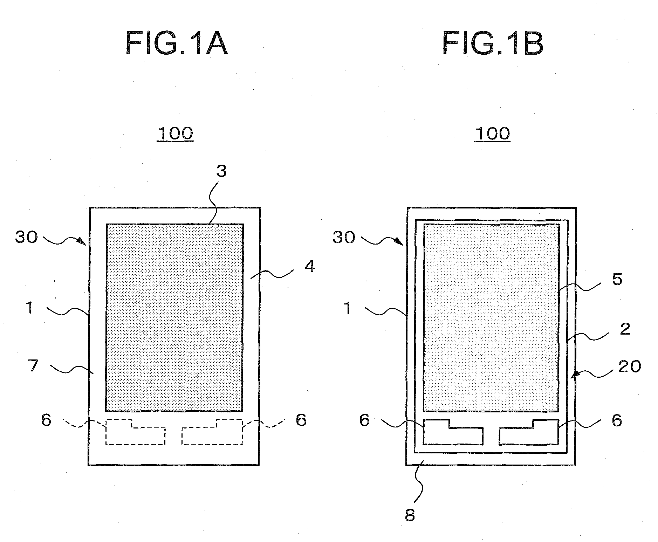

FIG. 1 is a plan view illustrating a structure of a touch panel 100 according to the first exemplary embodiment. FIG. 1A is a plan view of the touch panel 100 seen from the front side of a touch screen 1. FIG. 1B is a plan view of the touch panel 100 seen from the back of a sensor substrate 2.

The touch panel 100 according to this exemplary embodiment includes a touch screen 1, a sensor substrate 2 and a plurality of touch sensors (a first touch sensor 5 and second touch sensors 6).

Touch operation is performed to one face 7 of the touch screen 1 by a user. The sensor substrate 2 is arranged so that it faces other face 8 of the touch screen 1. A capacitance of the touch sensors (the first touch sensor 5 and the second touch sensors 6) changes along with touch operation.

The touch screen 1 has a transparent window part 3 and a periphery part 4. The transparent window part 3 is arranged so that it overlaps with a display area mentioned later. The periphery part 4 is arranged such that it is located outside the transparent window part 3 and overlaps with an area outside the display area (hereinafter, referred to as an outside area). A plurality of touch sensors include the first touch sensor 5 and the second touch sensors 6. The first touch sensor 5 is arranged so that it overlaps with the transparent window part 3. The first touch sensor 5 is provided on a face of the sensor substrate 2 in the touch screen 1 side in a manner being integral with the sensor substrate 2. The second touch sensors 6 are arranged so that they overlap with the periphery part 4. The second touch sensors 6 are formed onto a member of a substrate-like shape or a sheet-like shape (the touch screen 1, for example) besides the sensor substrate 2.

A touch panel manufacturing method according to this exemplary embodiment will be described.

A method to produce the touch panel 100 according to this exemplary embodiment includes a first step, a second step and a third step. The first step is a step for producing a sensor substrate side module 20 via a step for providing the first touch sensor 5 on one face of the sensor substrate 2 in an integrated manner with the sensor substrate 2. The second step is a step for producing a second touch sensor side module (a touch screen side module 30, for example) via a step for forming the second touch sensors 6 onto the member of the substrate-like shape or the sheet-like shape (the touch screen 1, for example) besides the sensor substrate 2. The third step is a step for assembling the second touch sensor side module and the sensor substrate side module 20 together such that the first touch sensor 5 overlaps with the transparent window part 3 of the touch screen 1 and the second touch sensors 6 overlap with the periphery part 4 of the touch screen 1.

Next, an example of the respective steps will be described in detail.

The first step is a step for producing the sensor substrate side module 20 via a step for providing the first touch sensor 5 on one face of the sensor substrate 2 in a manner integrated with the sensor substrate 2. In the first step, a plurality of kinds of the sensor substrate side module 20 in which at least one of a layout and a design of the first touch sensor 5 is different from each other are produced.

The second step is a step for producing a second touch sensor side module (the touch screen side module 30, for example) via a step for forming the second touch sensors 6 onto the member of the substrate-like shape or the sheet-like shape (the touch screen 1, for example) besides the sensor substrate 2. In the second step, a plurality of kinds of the second touch sensor side module in which at least one of a layout and a design of the second touch sensors 6 is different from each other are produced.

The third step includes a step for selecting a combination of the sensor substrate side module 20 and the second touch sensor side module. Moreover, a step for assembling sensor substrate side module 20 and the second touch sensor side module together is also included. On this occasion, respective modules are assembled such that one face of the sensor substrate 2 of selected sensor substrate side module 20 faces the other face 8 of a touch screen, and the first touch sensor 5 overlaps with the transparent window part 3 of the touch screen 1.

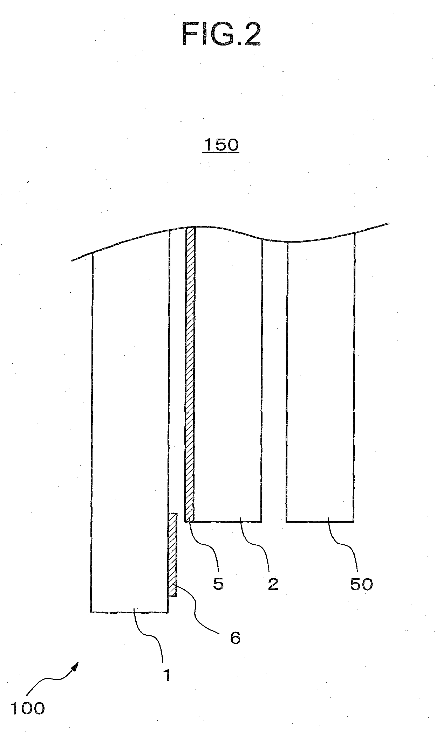

A structure of an electronic apparatus having the touch panel 100 according to this exemplary embodiment is shown in FIG. 2. An electronic apparatus 150 shown in FIG. 2 includes the touch panel 100 according to this exemplary embodiment and a display device (a liquid crystal display device 50, for example). The transparent window part 3 of the touch panel 100 is arranged so that it overlaps with the display area of the display device. The periphery part 4 of the touch panel 100 is arranged so that it overlaps with an area outside the display area (the outside area).

According to this exemplary embodiment, it becomes possible to use a space effectively and to diversify a combination of layouts or a combination of designs of the touch sensors inside and outside the display area.

### [The second exemplary embodiment]

Next, a touch panel of the second exemplary embodiment of the present invention will be described.

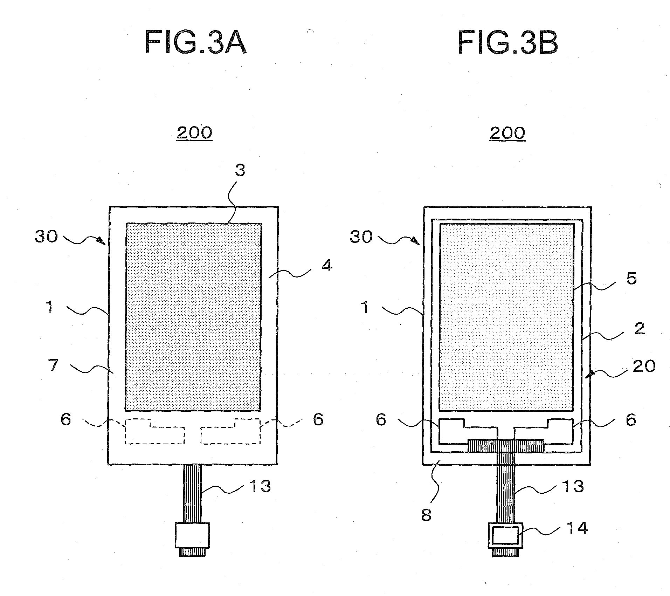

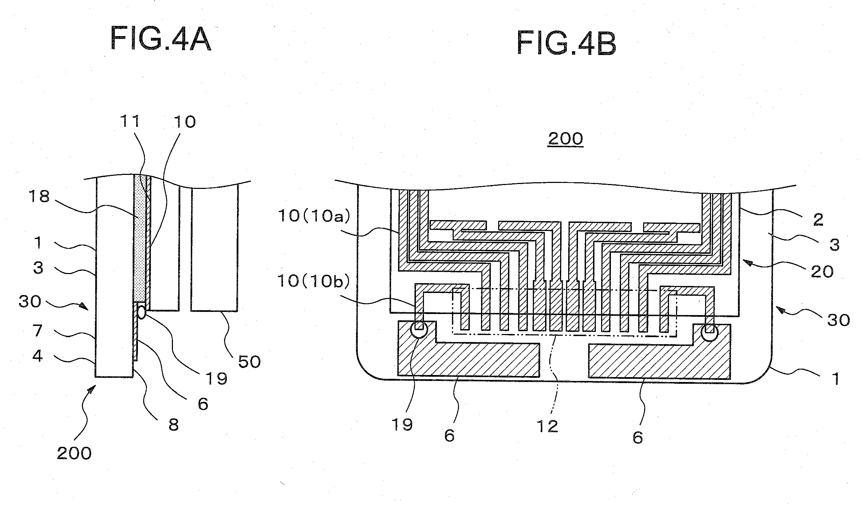

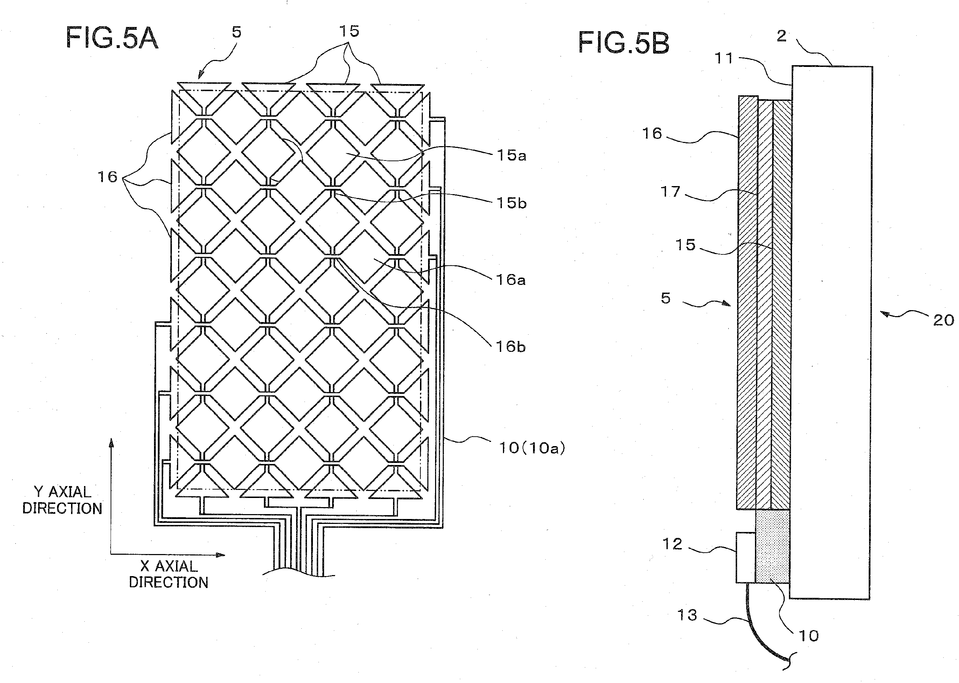

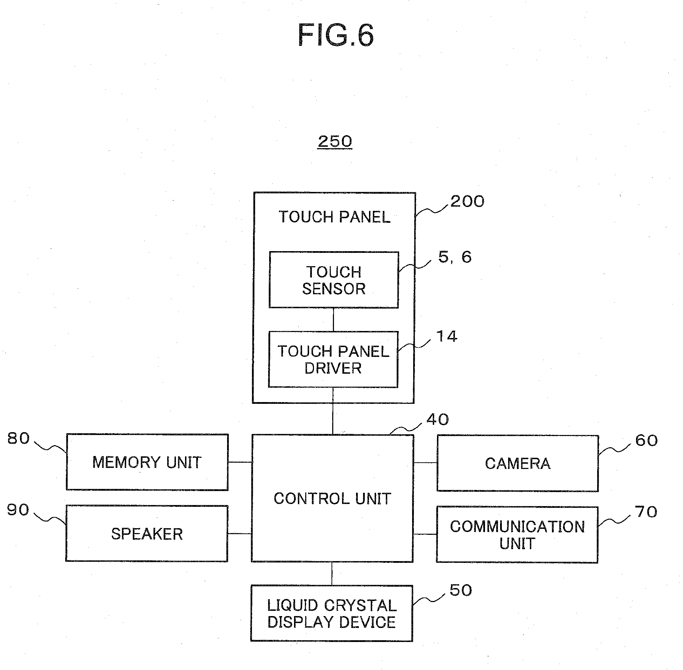

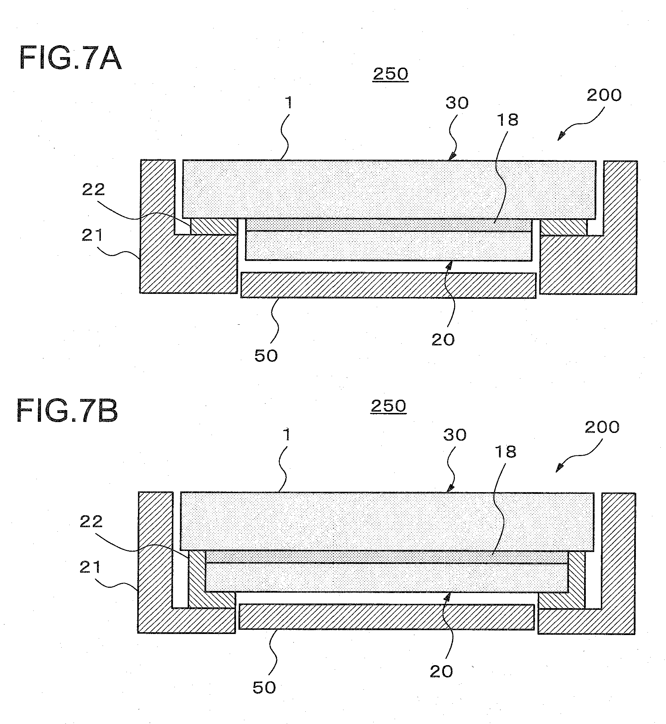

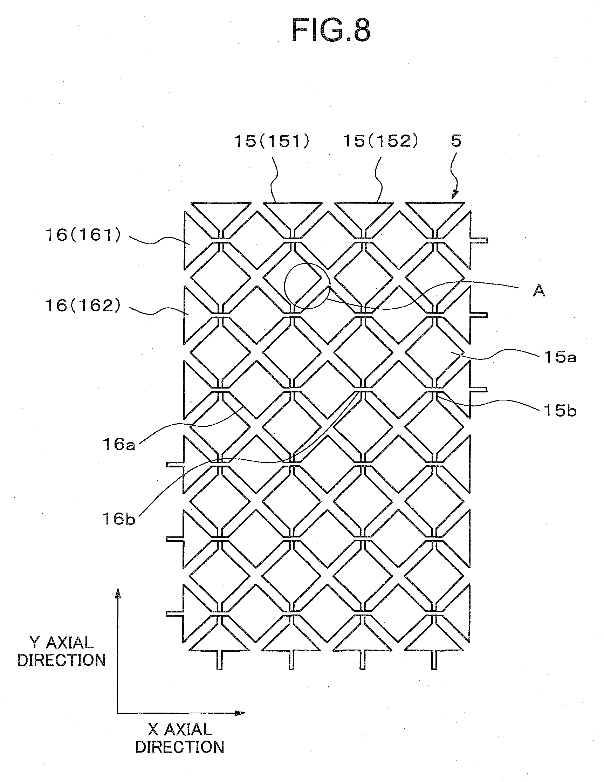

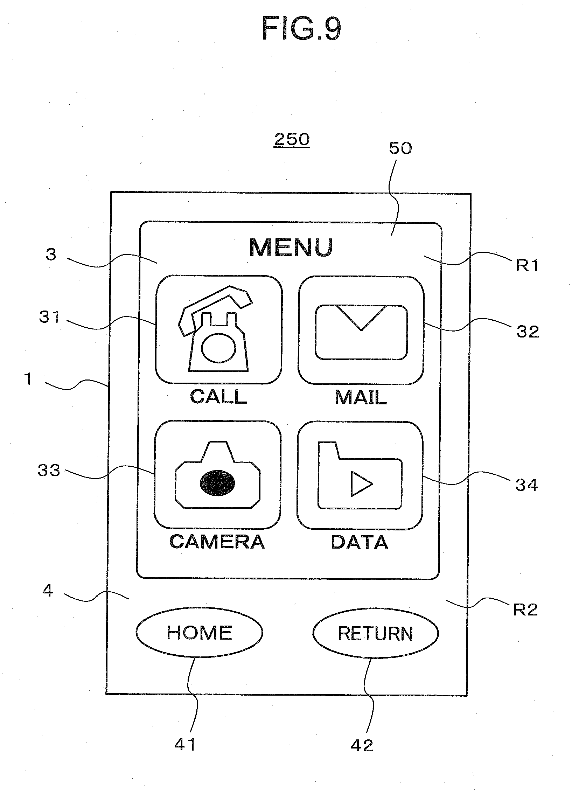

FIG. 3 is a plan view illustrating a structure of a touch panel 200 according to this exemplary embodiment. FIG. 3A is a plan view of the touch panel 200 seen from the front side of a touch screen 1. FIG. 3B is a plan view of the touch panel 200 seen from the back of a sensor substrate 2. FIG. 4 is a diagram illustrating a structure of major portions of the touch panel 200. FIG. 4A is a sectional view and FIG. 4B is a plan view of the back of the sensor substrate 2. FIG. 5 is a diagram describing a structure of a first touch sensor 5 arranged so that it overlaps with a display area of a liquid crystal display device 50. FIG. 5A is a plan view and FIG. 5B is a sectional view. FIG. 6 is a block diagram illustrating a structure of an electronic apparatus 250 according to this exemplary embodiment. FIG. 7 is a sectional view describing a joint structure of a case 21 and the touch screen 1 of the electronic apparatus 250. FIG. 8 is a diagram describing a detection operation by the first touch sensor 5. FIG. 9 is a diagram illustrating an example of s screen display of the liquid crystal display device 50 of the electronic apparatus 250.

A structure of the touch panel 200 in this exemplary embodiment will be described.

As shown in FIG. 3, the touch panel 200 includes the touch screen 1, the sensor substrate 2 and a plurality of touch sensors (to be described later). Touch operation is performed to one face 7 of the touch screen 1 by a user. The sensor substrate 2 is arranged so that it faces the other face 8 of the touch screen 1. Capacitances of the plurality of touch sensors change along with touch operation.

Further, the touch panel 200 includes a plurality of sensor wirings 10 (FIG. 4), an anisotropic conductive adhesive film (hereinafter, ACF (ACF: Anisotropic Conductive Film)) 12, a flexible printed circuit board (hereinafter, FPC (FPC: Flexible Printed Circuits)) 13 and a touch panel driver 14. The plurality of sensor wirings 10 are connected to each of the touch sensor separately. Further, in FIG. 4, in order to avoid the diagram becoming complex, illustration of the FPC 13 is omitted, and also the ACF 12 is indicated just by its outline of a chain double-dashed line.

The touch screen 1 has a transparent window part 3 and a periphery part 4. The transparent window part 3 is arranged so that it overlaps with a display area R1 of the liquid crystal display device 50 (FIG. 4A) provided in the electronic apparatus 250 mentioned later. The periphery part 4 is arranged so that it overlaps with an area (hereinafter, an outside area R2) outside the display area R1 in the electronic apparatus 250. The transparent window part 3 is configured transparently (so that visible light penetrates through). On the other hand, the periphery part 4 is configured to be opaque, for example (so that visible light does not penetrate through). The touch screen 1 is a tabular one made of a transparent material having an insulation property such as glass or transparent resin (acrylic resin, etc.), for example. To the periphery part 4 in the touch screen 1, a coating which makes the touch screen 1 opaque is given, for example. Meanwhile, the periphery part 4 is formed like a frame which surrounds the periphery of the transparent window part 3, for example.

The sensor substrate 2 is made of glass or a PET (Poly Ethylene Terephthalate) film, for example.

The touch sensor includes a first touch sensor 5 and second touch sensors 6. The first touch sensor 5 is arranged so that it overlaps with the transparent window part 3 of the touch screen 1. The second touch sensors 6 are arranged so that it overlaps with the periphery part 4 of the touch screen 1.

The first touch sensor 5 is provided on the face of the sensor substrate 2 in the touch screen 1 side in an manner integrated with the sensor substrate 2.

As shown in FIG. 5, the first touch sensor 5 includes a plurality of X axis touch sensors 15, a plurality of Y axis touch sensors 16 and an insulating layer 17, for example. The insulating layer 17 is arranged between the X axis touch sensors 15 and the Y axis touch sensors 16. Meanwhile, in FIG. 5A, in order to avoid the diagram becoming complex, illustration of the insulating layer 17 is omitted.

Here, it is supposed that one direction in a plane along the touch screen 1 is an X axial direction. Also, it is supposed that the direction orthogonal to the X axial direction in this plane is a Y axial direction. The X axis touch sensors 15 are ones for detecting an operation position in a X axial direction. As shown in FIG. 5A, a plurality of X axis touch sensors 15 are arranged in line in the X axial direction such that they extend in the Y axial direction, respectively On the other hand, the Y axis touch sensors 16 are ones for detecting an operation position in the Y axial direction. As shown in FIG. 5A, a plurality of Y axis touch sensors 16 are arranged in line in the Y axial direction such that they extend in X axial direction, respectively.

Each of the X axis touch sensors 15 includes a plurality of sensor units 15a and connecting parts 15b. The sensor units 15a are formed like a rhombus, respectively, for example. The connecting parts 15b connect neighboring sensor units 15a with each other. Meanwhile, the sensor units 15a located at an end of the X axis touch sensors 15 are formed like a triangle, for example. Respective ends of the X axis touch sensors 15 are located in line.

Similarly, each of the Y axis touch sensors 16 is configured including a plurality of sensor units 16a and connecting parts 16b. The plurality of sensor units 16a are formed like a rhombus, respectively, for example. The connecting parts 16b connect neighboring sensor units 16a with each other. Meanwhile, the sensor units 16a located at an end of the X axis touch sensors 16 is formed like a triangle, for example. Respective ends of the X axis touch sensors 16 are located in line. Each of the sensor units 15a and each of the sensor units 16a are arranged so as not to overlap with each other. Each of the connecting parts 15b is arranged such that it intersects (specifically, be orthogonal) with one of the connecting parts 16b having a corresponding position with each other.

By using the first touch sensor 5 of such structure, it is possible to detect a position of touch operation, based on a combination of the X axis touch sensors 15 and the Y axis touch sensors 16 in which a capacitance changes along with the touch operation.

The sensor wirings 10 (sensor wirings 10a) are connected to each of the X axis touch sensors 15 separately Similarly, the sensor wirings 10 (the sensor wirings 10a) are also connected to each of the Y axis touch sensors 16 separately.

As shown in FIG. 4, the second touch sensors 6 are formed in the other face 8 in the periphery part 4 of the touch screen 1. In the case of this exemplary embodiment, the second touch sensors 6 are made of a metallic film. Moreover, the sensor wirings 10 (sensor wirings 10b) are connected to each of the second touch sensors 6 separately. Specifically, the sensor wirings 10b are connected to each of the second touch sensors 6 via silver paste 19, for example.

Each of the sensor wirings 10 (the sensor wirings 10a and the sensor wirings 10b) is formed onto a face 11 of the sensor substrate 2 in the side of the touch screen 1.

These sensor wirings 10 (the sensor wirings 10a and the sensor wirings 10b) are connected to the FPC 13 via the ACF 12. In the FPC 13, the touch panel driver 14 is provided, for example.

The touch panel driver 14 inputs a drive signal to each of the X axis touch sensors 15, each of the Y axis touch sensors 16 and each of the second touch sensors 6 via wirings (not illustrated) in the FPC 13, wirings (not illustrated) in the ACF 12 and the sensor wirings 10, respectively. That is, the touch panel driver 14 functions as a drive signal input unit which inputs a drive signal to each touch sensor via each of the sensor wirings 10. As a drive signal, an AC signal or other pulse signals can be used, for example.

Here, in the touch screen 1, when touch operation of a part corresponding to each touch sensor is performed, a change occurs in the capacitance of the touch sensor corresponding to the part. The touch panel driver 14 monitors a change in the capacitance in each of the X axis touch sensors 15, each of the Y axis touch sensors 16 and each of the second touch sensors 6, for example. Then, the touch panel driver 14 determines a position of the touch operation based on the changes in the capacitances of these touch sensors.

In the case of this exemplary embodiment, detection of touch operation to a part (a part which overlaps with the display area R1) in the display area R1 in the touch screen 1, that is, to the transparent window part 3, and a positional determination of the touch operation are performed based on a combination of the X axis touch sensors 15 and the Y axis touch sensors 16 in which a capacitance has been changed.

Here, outline of a detection operation of touch operation to the transparent window part 3 and of a positional determination operation will be described. For example, it is supposed that touch operation has been made to a part A shown in FIG. 8. In this case, among the X axis touch sensors 15, while relatively large capacitance change occurs in an X axis touch sensor 151, slight capacitance change occurs in an X axis touch sensor 152. The touch panel driver 14 can recognize an operation position in the X axial direction based on these capacitance changes. That is, it is possible to recognize that the operation position in the X axial direction is between the X axis touch sensor 151 and the X axis touch sensor 152, and it is a position closer to the X axis touch sensor 151 than the X axis touch sensor 152. Similarly, the touch panel driver 14 can recognize that the operation position in the Y axial direction is between a Y axis touch sensor 161 and a Y axis touch sensor 162. In this way, the touch panel driver 14 can perform detection and position determination of touch operation to the part A. Meanwhile, in practice, by performing data processing of a higher degree than the operation described here, for example, it is possible to determine a more detailed operation position (coordinate).

On the other hand, detection of touch operation to a part outside the display area R1 in the touch screen 1 (a part which overlaps with the outside area R2), that is, the periphery part 4 and its positional determination are performed by determining which of the second touch sensors 6 has a capacitance that has been changed.

Thus, the touch panel driver 14 also functions as a touch operation determination unit which determines a position of touch operation based on a change in a capacitance in a touch sensor, for example.

Here, in order to reduce the power consumption of the touch panel 200, a period to input a drive signal to each touch sensor may be reduced.

Specifically, when a predetermined time passes since touch operation has not been detected any more, for example, the touch panel driver 14 stops input of a drive signal to the first touch sensor 5 (the X axis touch sensors 15 and the Y axis touch sensors 16) in the display area R1. Then, a drive signal is inputted to only the second touch sensors 6 of the outside area R2. In this state, when touch operation to the second touch sensors 6 of the outside area R2 is detected, the touch panel driver 14 resumes input of a drive signal to each of the touch sensors 15 and 16 in the display area R1. By such an operation, it is possible to reduce the power consumption of the touch panel 200.

As above, the touch panel driver 14 functions as an in-use state determination unit which determines whether the touch panel 200 is in the in-use state or not based on presence or absence of touch operation. Also, the touch panel driver 14 also functions as a drive signal input suspension unit that suspends, when being determined that the touch panel 200 is not in the in-use state by the in-use state determination unit, input of a drive signal to the first touch sensor 5. Moreover, when being determined that the touch panel 200 is in the in-use state by the in-use state determination unit in the state that input of a drive signal to the first touch sensor 5 is being suspended, the touch panel driver 14 also functions as a drive signal input resumption unit that makes input of a drive signal to the first touch sensor 5 be resumed.

In the state that a drive signal is inputted only to the second touch sensors 6 of the outside area R2, the touch panel driver 14 may make this drive signal be turned on/off intermittently (every several milliseconds, for example). That is, an input period (several milliseconds, for example) of a drive signal to the second touch sensors 6 and an input suspension period (several milliseconds, for example) of a drive signal to the second touch sensors 6 may be repeated. By thus doing, it is possible to further reduce the power consumption.

Thus, the touch panel driver 14 also functions as a drive signal input mode switch unit which changes, when being determined that the touch panel 200 is not in the in-use state by the in-use state determination unit, an input mode of a drive signal to the second touch sensors 6. As a result, a period for inputting a drive signal to the second touch sensors 6 and a period for not inputting it are repeated. Meanwhile, when an input suspension period is about several milliseconds, although a user may feel a slight delay in the response speed of touch operation, the second touch sensors 6 can be used without a trouble.

When touch operation is detected, the touch panel driver 14 outputs a result of the detection (information to the effect that the detection has been made, and information indicating a detection position). In the case of this exemplary embodiment, the touch panel driver 14 outputs a detection result to a control unit 40 mentioned later.

As shown in FIG. 6, the electronic apparatus 250 according to this exemplary embodiment includes the touch panel 200 according to this exemplary embodiment, a control unit 40 and the liquid crystal display device 50 as a suitable example of a display device. Besides, the electronic apparatus 250 may include a camera 60, a communication unit 70, a memory unit 80 and a speaker 90, for example. The camera 60 performs an image-taking operation. The communication unit 70 performs communication (a telephone call, web communication and sending and receiving an e-mail, etc.) with the outside of the electronic apparatus 250. The memory unit 80 stores various kinds of data and application programs. The speaker 90 performs a sound making operation.

The control unit 40 performs operation control of the touch panel 200, the liquid crystal display device 50, the camera 60, the memory unit 80 and the speaker 90.

The touch panel driver 14 of the touch panel 200 outputs a drive signal to each touch sensor under the control of the control unit 40. Moreover, a detection result of touch operation is inputted from the touch panel driver 14 to the control unit 40. The operation control which the control unit 40 performs includes operation control according to this detection result.

The liquid crystal display device 50 performs various display operations in the display area R1 of the liquid crystal display device 50 under control of the control unit 40. Here, indication which the liquid crystal display device 50 performs includes indication of input icons 31, 32, 33 and 34 as shown in FIG. 9, for example. When a user performs touch operation to a part corresponding to these input icons 31-34 in the touch screen 1, the capacitances of the X axis touch sensors 15 and the Y axis touch sensors 16 in the position corresponding to each of the input icons 31-34 changes.

Further, input indicators 41 and 42 are formed on the front face of the touch screen 1 as shown in FIG. 9, for example. In the touch screen 1, the above-mentioned second touch sensors 6 are formed respectively in the back of these input indicators 41 and 42. When the user performs touch operation of the parts corresponding to these input indicators 41 and 42 in the touch screen 1, the capacitances of the second touch sensors 6 in the positions corresponding to each of the input indicators 41 and 42 changes.

As shown in FIG. 9, for example, the second touch sensors 6 corresponds to operation with a high frequency of use such as "HOME", "RETURN" and the like. When operation of "RETURN" is performed, an operation screen to be indicated on the display area R1 returns to the previous screen. When operation of "HOME" is performed, the operation screen returns to the initial screen (the screen shown in FIG. 9, for example).

Here, by the sensor substrate 2, the first touch sensor 5 (the X axis touch sensors 15 and the Y axis touch sensors 16) and each of the sensor wirings 10 (the sensor wirings 10a and the sensor wirings 10b), the sensor substrate side module 20 is constituted. By the touch screen 1 and the second touch sensors 6, the touch screen side module 30 is constituted. As shown in FIG. 4 and FIG. 7, these sensor substrate side module 20 and touch screen side module 30 are bonded together via adhesive material 18 or resin (not illustrated).

As shown in FIG. 7A or FIG. 7B, the electronic apparatus 250 may further include a case 21. In the structure of FIG. 7A, the touch screen 1 (then, the touch screen side module 30) is bonded to the case 21 via adhesive material 22, for example. The sensor substrate side module 20 is made hang in the air via the touch screen side module 30.

On the other hand, in the structure of the FIG. 7B, both of the sensor substrate side module 20 and the touch screen side module 30 are bonded to the case 21. Meanwhile, the face 8 in the periphery part 4 of the touch screen 1 can be bonded with the case 21 via the adhesive material 22. Therefore, an adhesion portion between the touch screen 1 and the case 21 can also be made function as a touch sensor 6 by making it such structure.

Next, a touch panel manufacturing method according to this exemplary embodiment will be described.

First, the first step that produces the sensor substrate side module 20 and the second step that produces the touch screen side module 30 are performed respectively

In the first step, the sensor wirings 10 are formed onto the face 11 of the sensor substrate 2 in the touch screen 1 side. The first touch sensor 5 is provided in this face 11. The sensor substrate side module 20 is produced via these steps. Meanwhile, in the first step, a plurality of kinds of the sensor substrate side module 20 in which at least one of a layout and a design of the first touch sensor 5 is different from each other are produced. A layout of the first touch sensor 5 means the number of and arrangement of the X axis touch sensors 15 and the Y axis touch sensors 16, for example. A design of the first touch sensor 5 means the shape of the X axis touch sensors 15 and the Y axis touch sensors 16 (the shape of the sensor units 15a and 16a, and the shape of the connecting parts 15b and 16b), for example.

In the second step, the input indicators 41 and 42 are formed in the one face 7 of the touch screen 1 in the periphery part 4. Also, the second touch sensors 6 are formed in the other face 8 in the periphery part 4. The touch screen side module 30 is produced through these steps. Meanwhile, in the second step, a plurality of kinds of touch screen side module 30 in which at least one of a layout and a design of the second touch sensors 6 is different from each other are produced. A layout of the second touch sensors 6 means the number and the arrangement of the second touch sensors 6, for example. A design of the second touch sensors 6 means a shape of the second touch sensors 6 and a shape of the input indicators 41 and 42, for example.

Next, the third step is performed. In the third step, first, a combination of the sensor substrate side module 20 and touch screen side module 30 is selected. That is, any one among a plurality of kinds of the sensor substrate side module 20 produced in the first step is selected, and any one among a plurality of kinds of the touch screen side module 30 produced in the second step is selected. The sensor substrate side module 20 and the touch screen side module 30 are assembled together such that the face 11 faces the face 8 and the first touch sensor 5 overlaps with the transparent window part 3 of the touch screen. Meanwhile, the face 11 is one face of the sensor substrate 2 of the selected sensor substrate side module 20. The face 8 is the other face of the touch screen 1 of the selected touch screen side module 30.

That is, in the third step, the sensor substrate side module 20 and the touch screen side module 30 are bonded together by the adhesive material 18. Moreover, the sensor wirings 10b and the second touch sensors 6 are connected mutually via silver paste 19.

Further, the ACF 12 is connected to each of the sensor wirings 10, and the FPC 13 is connected to this ACF 12. As a result, the touch panel driver 14 provided in the FPC 13 can be connected to each touch sensor (each of the X axis touch sensors 15, each of the Y axis touch sensors 16 and each of the second touch sensors 6) via the FPC 13, the ACF 12 and each of the sensor wirings 10.

In this way, it is possible to produce the touch panel 200.

As above, the touch screen 1 of the touch panel 200 in this exemplary embodiment has the transparent window part 3 and the periphery part 4. The transparent window part 3 is arranged so that it overlaps with the display area R1 of the electronic apparatus 250 in which the touch panel 200 is provided. The periphery part 4 is arranged so that it is located outside the transparent window part 3 and overlaps with an area (the outside area R2) outside the display area R1. Also, a plurality of touch sensors include the first touch sensor 5 and the second touch sensors 6. The first touch sensor 5 is arranged so that it overlaps with the transparent window part 3. The second touch sensors 6 are arranged so that they overlap with the periphery part 4.

By having a structure described above, in the display area R1, the first touch sensor 5 can detect touch operation as input operation. Also, in the outside of the display area R1, the second touch sensors 6 can detect touch operation as input operation. Therefore, it becomes possible to effectively use space of the electronic apparatus 250 in which the touch panel 200 is provided.

A metallic film as the second touch sensors 6 is formed onto the face 8 that is the back of the periphery part 4 of the touch screen 1. Therefore, the adhesion portion of the touch screen 1 and the case 21 can also be made function as the touch sensors 6.

While the first touch sensor 5 is provided in a manner being integral with the sensor substrate 2, the second touch sensors 6 are formed in the touch screen 1. Therefore, after producing the sensor substrate side module 20 and the touch screen side module 30 separately, the touch panel 200 can be produced through a step for assembling the sensor substrate side module 20 and the touch screen side module 30 together. Meanwhile, the sensor substrate side module 20 includes the sensor substrate 2 and the first touch sensor 5. The touch screen side module 30 includes the touch screen 1 and the second touch sensors 6.

By taking such structure, while producing a plurality of kinds of the sensor substrate side module 20 in which at least one of a layout and a design of the first touch sensor 5 is different from each other, a plurality of kinds of the touch screen side module 30 in which at least one of a layout and a design of the second touch sensors 6 is different from each other can be produced. A combination of the sensor substrate side module 20 and the touch screen side module 30 can be selected arbitrarily. Therefore, it is possible to diversify a combination of a layout of or a combination of a design of touch sensors inside and outside the display area R1. As a result, it becomes easy to perform product development of a various kinds of the electronic apparatus 250 having the touch panel 200.

### [The third exemplary embodiment]

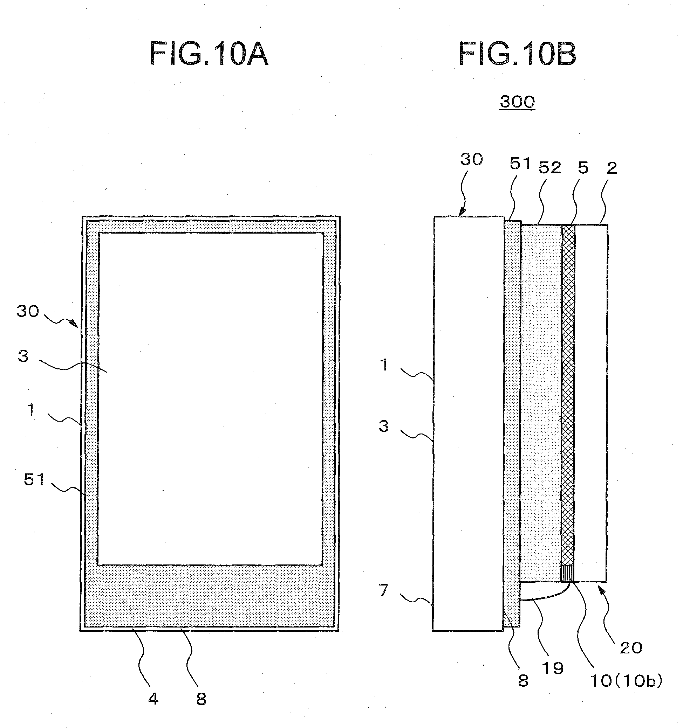

FIG. 10 is a diagram illustrating a structure of a touch panel 300 according to the third exemplary embodiment. FIG. 10A is a plan view of a touch screen side module 30 seen from the back of a touch screen 1. FIG. 10B is a sectional view of the touch panel 300.

The touch panel 300 according to this exemplary embodiment has a second touch sensor 51 made of a printed area containing metal, instead of the second touch sensors 6 made of a metallic film. That is, in the face 8 of the touch screen 1, the second touch sensor 51 made of a conductive printed area containing metal is formed around the transparent window part 3 (in other words, in the periphery part 4), for example. The layout and the design of the second touch sensor 51 are arbitrary. In FIG. 10, an example in which the second touch sensor 51 is formed on almost all over the surface of the periphery part 4 is illustrated. Accordingly, in the case of this exemplary embodiment, although illustration is omitted, one input indicator should be formed instead of the input indicators 41 and 42. On this occasion, this input indicator should be formed onto the face 7 of the touch screen such that it circles round the transparent window part 3.

An insulating layer 52 is formed between the second touch sensor 51 and the first touch sensor 5. Moreover, the second touch sensor 51 is connected with sensor wirings 10 (sensor wirings 10b) via silver paste 19. Meanwhile, in the case of this exemplary embodiment, each of sensor wirings 10a (not illustrated in FIG. 10) is connected to X axis touch sensors 15 and Y axis touch sensors 16 of which a first touch sensor 5 is composed.

Next, a touch panel manufacturing method in this exemplary embodiment will be described. In this exemplary embodiment, it is different from the second exemplary embodiment in a point that the second touch sensor 51 and an input indicator (not illustrated) are formed instead of the second touch sensors 6 and the input indicators 41 and 42. Also, it is different from the second exemplary embodiment in a point that the insulating layer 52 is formed between the second touch sensor 51 and the first touch sensor 5. Other steps are the same as those of the above-mentioned second exemplary embodiment.

Also in this exemplary embodiment, it is possible to obtain the same effect as the above-mentioned first and second exemplary embodiments.

Meanwhile, a printed area of which the second touch sensor 51 is composed may have decorativeness (it is colored, for example). In this case, this printed area may be able to be seen through from the front side (the face 7 side) of the periphery part 4 of the touch screen 1 via the periphery part 4. By adopting such structure, the second touch sensor 51 can be used also as a decoration member. Therefore, it is possible to improve the decorativeness of the touch panel 300, and eventually an electronic apparatus having this touch panel 300.

### [Modification of the third exemplary embodiment]

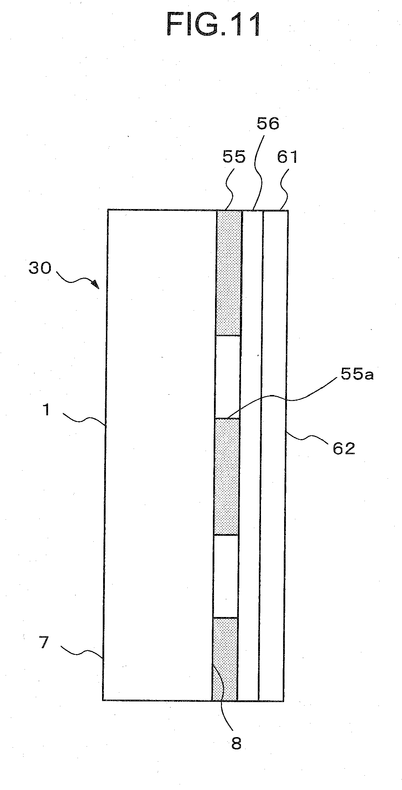

FIG. 11 is a sectional view illustrating a structure of a touch screen side module 30 of a touch panel according to a modification of the third exemplary embodiment.

As shown in FIG. 11, on a face 8 of a touch screen 1 of this modification, a clear metal layer 55 of an electrical conductivity is formed (formed by coating, for example) onto all over an area surrounding a transparent window part 3 (a periphery part 4) . In this clear metal layer 55, an opening 55a is formed in a position corresponding to a second touch sensor 62. Moreover, an insulating layer 56 is formed on this clear metal layer 55. Further, a printed area 61 containing metal is formed on the insulating layer 56. In the printed area 61, a part corresponding to the opening 55a functions as a second touch sensor 62. Meanwhile, sensor wirings 10b (not illustrated) are connected to this second touch sensor 62.

In a face 7 of the touch screen 1, when an operator touch a part except for the part corresponding to the opening 55a using a finger, it does not have an influence on the capacitance of the second touch sensor 62 because capacity coupling with the clear metal layer 55 is caused. On the other hand, in the face 7 of the touch screen 1, when touch operation is made to a part corresponding to the opening 55a, the capacitance of the second touch sensor 62 changes. Therefore, the touch operation can be detected.

Also by this modification, it is possible to obtain the same effect as the third exemplary embodiment.

### [The fourth exemplary embodiment]

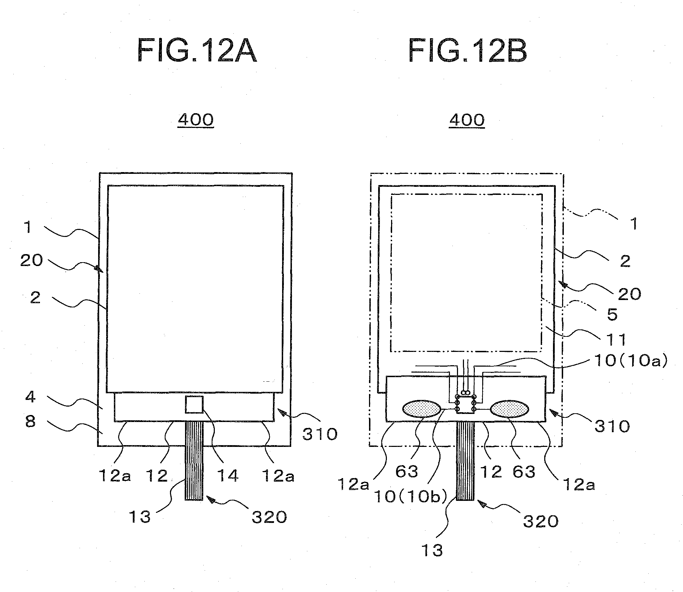

FIG. 12 is a plan view illustrating a structure of a touch panel 400 according to the fourth exemplary embodiment. FIG. 12A is a diagram in which the touch panel 400 is seen from the back of a sensor substrate 2. FIG. 12B is a diagram in which the sensor substrate 2 of the touch panel 400 is seen from the front side. Meanwhile, a structure of electronic apparatus 250 is the same as that of the second exemplary embodiment.

In the case of this exemplary embodiment, second touch sensors 63 are formed onto a face of an ACF 12 in a touch screen 1 side, for example. These second touch sensors 63 are made of a metallic film, for example.

The ACF 12 has an area expansion part 12a, the area of which has been expanded in order to form the second touch sensors 63, for example. The second touch sensors 63 are formed onto this area expansion part 12a.

Meanwhile, in the case of this exemplary embodiment, a touch panel driver 14 is provided in the ACF 12, for example.

Moreover, the ACF 12 has sensor wirings 10b that connect each of the second touch sensors 63 and the touch panel driver 14 mutually.

Here, the ACF 12, the second touch sensors 63 and the touch panel driver 14 constitute an anisotropic conductive adhesive film module (ACF module) 310. Only the FPC 13 constitutes a flexible printed circuit board module (FPC module) 320, for example.

Next, a touch panel manufacturing method in the case of this exemplary embodiment will be described.

First, the first step that produces a sensor substrate side module 20 and the second step that produces an ACF module 310 and a FPC module 320 are performed respectively

In the first step, sensor wirings 10 are formed onto the face 11 of the sensor substrate 2 in the touch screen 1 side just like each of the above-mentioned exemplary embodiments. The sensor substrate side module 20 is produced via a step for providing the first touch sensor 5 on this face 11. Moreover, a plurality of kinds of the sensor substrate side module 20 in which at least one of a layout and a design of a first touch sensor 5 is different from each other are produced.

In the second step, in the case of this exemplary embodiment, the second touch sensors 63 made of a metallic film are formed onto a face of the ACF 12 having the area expansion part 12a in the touch screen 1 side. Then, the ACF module 310 is produced via a step for providing the touch panel driver 14 in this ACF 12. Here, in the second step, a plurality of kinds of the ACF module 310 in which at least one of a layout and a design of the second touch sensors 63 is different from each other are produced. A layout of the second touch sensors 63 means the number and arrangement of the second touch sensors 63, for example. A design of the second touch sensors 63 means a shape of the second touch sensors 63 and a shape of the input indicators 41 and 42, for example. Meanwhile, according to this exemplary embodiment, the FPC module 320 is constituted by only the FPC 13, for example. Therefore, when the FPC 13 is produced, there is no need in particular for a step for producing the FPC module 320.

Next, the third step is performed. In the third step, first, a combination of the sensor substrate side module 20 and the ACF module 310 is selected. That is, any one among a plurality of kinds of the sensor substrate side module 20 produced in the first step is selected, and any one among a plurality of kinds of the ACF module 310 produced in the second step is selected. Then, the sensor substrate side module 20, the ACF module 310, the FPC module 320 and the touch screen 1 are assembled together. On this occasion, each module and the touch screen 1 are assembled such that the face 11 faces the face 8, the first touch sensor 5 overlaps with the transparent window part 3 of the touch screen 1, and the second touch sensors 63 overlaps with the periphery part 4 of the touch screen 1. Meanwhile, the face 11 is one face of the sensor substrate 2 of the selected sensor substrate side module 20. The face 8 is a face of the touch screen 1 opposite of the face 7.

Meanwhile, the sensor substrate side module 20 and the touch screen 1 are bonded together by adhesive material 18. Moreover, the ACF 12 is connected to each of the sensor wirings 10a, and, further, the FPC 13 is connected to this ACF 12.

In this way, the touch panel 400 can be produced.

According to the fourth exemplary embodiment mentioned above, the touch screen 1 of the touch panel 400 has the transparent window part 3 and the periphery part 4. The transparent window part 3 is arranged so that it overlaps with the display area R1 of the electronic apparatus 250 including the touch panel 400. The periphery part 4 is arranged so that it is located outside the transparent window part 3 and overlaps with an area (the outside area R2) outside the display area R1. Also, a plurality of touch sensors includes the first touch sensor 5 and the second touch sensors 63. The first touch sensor 5 is arranged so that it overlaps with the transparent window part 3. The second touch sensors 63 is arranged so that it overlaps with the periphery part 4.

By a structure described above, in the display area R1, it is possible to detect touch operation as input operation by the first touch sensor 5. On the other hand, outside the display area R1, it is possible to detect touch operation as input operation by the second touch sensors 63. Therefore, it becomes possible to effectively use space of the electronic apparatus 250 to which the touch panel 400 is provided.

While the first touch sensor 5 is provided integrally with the sensor substrate 2, the second touch sensors 63 are formed onto the ACF 12.

Therefore, after producing the sensor substrate side module 20 and the ACF module 310 separately, the touch panel 400 can be produced via a step for assembling the produced sensor substrate side module 20 and the ACF module 310 together. The sensor substrate side module 20 includes the sensor substrate 2 and the first touch sensor 5. The ACF module 310 includes the ACF 12 and the second touch sensors 63.

For this reason, while producing a plurality of kinds of the sensor substrate side module 20 in which at least one of a layout and a design of the first touch sensor 5 is different from each other, a plurality of kinds of the ACF module 310 in which at least one of a layout and a design of the second touch sensors 63 is different from each other can be produced. Also, a combination of the sensor substrate side module 20 and the ACF module 310 can be selected arbitrary. Therefore, it is possible to diversify a combination of a layout of or a combination of a design of the touch sensors inside and outside the display area R1. As a result, it becomes easy to perform product development of the various kinds of the electronic apparatus 250 having the touch panel 400.

Further, although, according to the fourth exemplary embodiment, an example in which the second touch sensors 63 is formed onto the ACF 12 has been described, it is not limited to this. That is, the second touch sensors 63 may be formed onto the FPC 13 (for example, it may be formed onto an area expansion part formed in the FPC 13). Or, the second touch sensors 63 may be formed in both of the ACF 12 and the FPC 13 respectively. When the second touch sensors 63 are formed in the FPC 13 (or, also into the FPC 13), it is possible to diversify a combination of a layout or a combination of a design of the touch sensors inside and outside the display area R1.

That is, while producing a plurality of kinds of the sensor substrate side module 20 in which at least one of a layout and a design of the first touch sensor 5 is different from each other, a plurality of kinds of the FPC module 320 (and the ACF module 310) in which at least one of a layout and a design of the second touch sensors 63 is different from each other are produced. A combination of the sensor substrate side module 20 and the FPC module 320 (and the ACF module 310) is selected arbitrary. As a result, it is possible to diversify a combination of a layout or a combination of a design of the touch sensors inside and outside the display area R1. Therefore, it becomes easy to perform product development of the various kinds of the electronic apparatus 250 having the touch panel 400.

According to each of the above-mentioned exemplary embodiments, although an example in which the touch panel driver 14 performs a determination operation of the touch sensor to which a change in the capacitance has been caused has been described, it is not limited to this. That is, the control unit 40 may perform such determination operation. In this case, the touch panel driver 14 may output a detection result of a change in the capacitance in each touch sensor to the control unit 40. The control unit 40 may perform a determination operation of the touch sensor (and a combination of touch sensors) to which a capacitance has been caused based on a detection result inputted from the touch panel driver 14.

Although the present invention has been described with reference to the exemplary embodiments above, the present invention is not limited to the above-mentioned exemplary embodiments. Various modifications which a person skilled in the art can understand can be made to the composition and details of the present invention within the scope of the present invention.

This application claims priority based on Japanese application Japanese Patent Application No. 2009-109922 filed on April 28, 2009, the disclosure of which is incorporated herein in its entirety.

### Description of Symbols

- 1: Touch screen
- 2: Sensor substrate
- 3: Transparent window part
- 4: Periphery part
- 5: First touch sensor
- 6: Second touch sensor
- 7: Face
- 8: Face
- 10: Sensor wiring
- 10a: Sensor wiring (first sensor wiring)
- 10b: Sensor wiring (second sensor wiring)
- 11: Face
- 12: Anisotropic conductive adhesive film (ACF)
- 12a: Area expansion part
- 13: Flexible printed circuit board (FPC)
- 14: Touch panel driver
- 15: X axis touch sensor
- 15a: Sensor unit
- 15b: Connecting part
- 16: Y axis touch sensor
- 16a: Sensor unit
- 16b: Connecting part
- 17: Insulating layer
- 18: Adhesive material
- 19: Silver paste
- 20: Sensor substrate side module
- 21: Case
- 22: Adhesive material
- 30: Touch screen side module
- 31,32,33,34: Input icon
- 40: Control unit
- 41, 42: Input indicator
- 50: Liquid crystal display device
- 51: Second touch sensor
- 52: Insulating layer
- 55: Clear metal layer
- 55a: Opening
- 56: Insulating layer
- 60: Camera
- 61: Printed area
- 62: Second touch sensor
- 63: Second touch sensor
- 70: Communication unit
- 80: Memory unit
- 90: Speaker
- 100: Touch panel
- 150: Electronic apparatus
- 151: X axis touch sensor
- 152: X axis touch sensor
- 161: Y axis touch sensor
- 162: Y axis touch sensor
- 200: Touch panel
- 250: Electronic apparatus
- 300: Touch panel
- 310: ACF module (anisotropic conductive adhesive film module)
- 320: FPC module (flexible printed circuit board module)
- 400: Touch panel
- A: Part
- R1: Display area
- R2: Outside area

## Claims

1. A touch panel comprising:
a touch screen having one face to be touch-operated by a user;
a sensor substrate arranged facing an other face of said touch screen; and
a plurality of touch sensors each having a capacitance changed by said touch operation;
wherein said touch screen includes a transparent window part arranged in a manner overlapping with a display area and a periphery part located outside said transparent window part and arranged in a manner overlapping with an area outside said display area,
wherein said plurality of touch sensors include a first touch sensor arranged in a manner overlapping with said transparent window part, and a second touch sensor arranged in a manner overlapping with said periphery part,
wherein said first touch sensor is provided on a face of said sensor substrate in a side of said touch screen integrally with said sensor substrate, and
wherein said second touch sensor is formed in a substrate-like or sheet-like member besides said sensor substrate.

2. The touch panel according to claim 1,
wherein said second touch sensor is formed in said other side of said touch screen in said periphery part.

3. The touch panel according to claim 1 or claim 2, further comprising:
a plurality of sensor wirings connected to each of said touch sensors separately;
an anisotropic conductive adhesive film arranged in a manner facing said other face of said touch screen; and
a flexible printed circuit board arranged facing said other face of said touch screen,
wherein said plurality of sensor wirings include a first sensor wiring connected to said first touch sensor and a second sensor wiring connected to said second touch sensor,
wherein said flexible printed circuit board is connected to said first touch sensor via an said anisotropic conductive adhesive film and said first sensor wiring in this order, and
wherein said second touch sensor is formed in at least any one of a face of said flexible printed circuit board in a side of said touch screen and a face of said anisotropic conductive adhesive film in said side of said touch screen.

4. The touch panel according to claim 3,
wherein at least any one of said flexible printed circuit board and said anisotropic conductive adhesive film includes an area expansion part having an area expanded for use in forming said second touch sensor, and
wherein said second touch sensor is formed in said area expansion part.

5. The touch panel according to any one of claims 1 to 4,
wherein said second touch sensor is made of a metallic film.

6. The touch panel according to claim 1 or 2,
wherein said second touch sensor is made of a printed area containing metal.

7. The touch panel according to claim 6,
wherein said printed area has decorativeness, and
wherein said printed area is possible to be seen through from a front side of said periphery part of said touch screen via the periphery part .

8. The touch panel according to any one of claims 1 to 7, comprising:
a drive signal input unit for inputting a drive signal to each of said touch sensors via each of said sensor wirings;
an in-use state determination unit for determining whether the touch panel is in an in-use state based on presence of said touch operation;
a drive signal input suspension unit for stopping input of said drive signal to said first touch sensor, upon the touch panel being determined not to be in said in-use state by said in-use state determination unit; and
a drive signal input resumption unit for making input of said drive signal to said first touch sensor resume, upon the touch panel being determined to be in said in-use state by said in-use state determination unit in a state input of said drive signal to said first touch sensor being stopped.

9. The touch panel according to claim 8, further comprising:
a drive signal input mode switch unit for changing an input mode of said drive signal to said second touch sensor in a manner a period of inputting said drive signal to said second touch sensor and a period of not inputting said drive signal being repeated, upon the touch panel being determined not to be in said in-use state by said in-use state determination unit.

10. A manufacturing method of a touch panel having a touch screen, comprising:
a first step for producing a sensor substrate side module via a step for providing a first touch sensor on one face of a sensor substrate in an integrated manner with the sensor substrate;
a second step for producing a second touch sensor side module via a step for forming said second touch sensor in a substrate-like or sheet-like member besides said sensor substrate; and
a third step for assembling said second touch sensor side module and said sensor substrate side module together in a manner said first touch sensor overlapping with a transparent window part of said touch screen and said second touch sensor overlapping with a periphery part of said touch screen.

11. The manufacturing method of a touch panel according to claim 10, wherein,
in said first step, a plurality of kinds of said sensor substrate side module are produced in a manner at least one of a layout and a design of said first touch sensor is different from each other; and
in said second step, a plurality of kinds of said second touch sensor side module are produced in a manner at least one of said layout and said design of said second touch sensor is different from each other.

12. The manufacturing method of a touch panel according to claim 11,
wherein said third step further includes a step of selecting a combination of said sensor substrate side module and said second touch sensor side module.

13. The manufacturing method of a touch panel according to any one of claims 10 to 12,
wherein said substrate-like or sheet-like member besides said sensor substrate is said touch screen;
wherein, in said second step, said second touch sensor side module is formed via a step of forming said second touch sensor in a periphery part of said touch screen; and
wherein said second touch sensor side module is a touch screen side module.

14. The manufacturing method of a touch panel according to any one of claims 10 to 13,
wherein said substrate-like or sheet-like member besides said sensor substrate is at least any one of an anisotropic conductive adhesive film and a flexible printed circuit board.

15. An electronic apparatus comprising:
a touch panel according to any one of claims 1 to 9; and
a display device;
wherein said transparent window part of said touch panel is arranged in a manner overlapping with a display area of said display device; and
wherein said periphery part of said touch panel is arranged in a manner overlapping with an area outside said display area.
